(19) Europäisches Patentamt
European Patent Office
Office européen des brevets

(11) Publication number: **0 245 091 A1**

(12) **EUROPEAN PATENT APPLICATION**

(21) Application number: **87304042.2**

(22) Date of filing: **06.05.87**

(51) Int. Cl.[4]: **G 01 L 1/24**, G 01 L 11/00

(30) Priority: **09.05.86 US 861782**

(43) Date of publication of application: **11.11.87 Bulletin 87/46**

(84) Designated Contracting States: **BE CH DE FR GB IT LI NL SE**

(71) Applicant: **THOMAS & BETTS CORPORATION, 920 Route 202, Raritan New Jersey 08869 (US)**

(72) Inventor: **Kieli, Michael, 1425 Neshaminy Valley Drive Bensalem, Bucks Pennsylvania (US)**
Inventor: **Herczfeld, Peter, 7105 Greene Street, Philadelphia Pennsylvania (US)**

(74) Representative: **Howick, Nicholas Keith et al, CARPMAELS & RANSFORD 43 Bloomsbury Square, London WC1A 2RA (GB)**

(54) **Method of and apparatus for fiber optic sensing.**

(57) An optical sensor (50) employing an optical wave-guide (10) is disclosed. The sensor (50) senses stress placed on the wave-guide (10) due to changes in the external environment. Light is launched into a restricted group of core modes of a fiber wave-guide and is redistributed in the fiber due to changes in the external environment. These changes can be detected and may be used to interpret the amount of stress on the fiber (10).

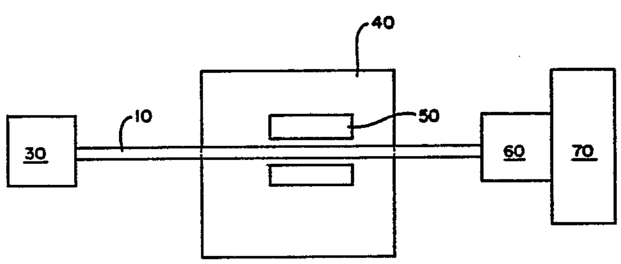




ACTORUM AG

0245091

T&B 989

# METHOD OF AND APPARATUS FOR FIBER OPTIC SENSING

## FIELD OF INVENTION

The present invention relates generally to sensors employing optical wave-guides and more particularly relates to a method employing optical fibers in a sensor for measuring stress, temperature, pressure, sound or the like.

## BACKGROUND OF THE INVENTION

With the advent of improved optical fibers capable of permitting light transmission along long paths with relatively low loss, fiber optics has emerged as a viable medium for signal transmission. The transmission of information, in signal form, by means of light along a thin glass or plastic fiber is now emerging as the preferred technique for signal transmission. It is presently widely used in the telephone industry replacing conventional copper wire. This is due in part to the relative cost of optical fiber as opposed to copper wire and the vast increase in information which can be carried by an optical fiber. In computer applications fiber optics is also gaining increased acceptability as optical fibers are not susceptible to cross-talk nor the problems which plague electrical transmission due to radio frequency interference and electromagnetic interference.

The unique properties of optical transmission in a wave-guide also permit fibers to be used as a sensor for sensing external stress on the fiber. Fiber disturbance such as mechanical deformation caused by external stress will tend to disrupt the light propagation. This disruption may be accurately measured thereby permitting the fiber to serve as a viable sensing device.

Briefly, optical fibers which are employed in sensing devices are typically cylindrical wave-guides generally referred to as fibers usually consisting of two concentric dielectrical cylinders referred to respectively as the core and the cladding.

Referring to Figure 1, a fiber optic cable 1 includes a central cylindrical core 10, an outer concentric cladding 12 surrounding the core forming a fiber 11. An outer protective buffer 14 protects the core and cladding. While optical fibers, such as those used in the present invention and shown in Figure 1, are relatively small in size, typically having a core diameter of between 50-200μm they are substantially larger than the wavelength of light propagating therethrough and therefore the light may be considered as propagating in the form of rays or beams which are reflected at the barrier between the core and the cladding.

Referring still to Figure 1, light propagation schematicly shown as ray 16, may be thought of as traversing through the fiber by bouncing off the various boundaries of the wave-guide. The fiber shown in Figure 1 is a step index fiber which may be used for light transmission. The core of the fiber is formed of a material having an index of refraction which is greater than the material forming the cladding. A ray of light traveling from one medium into another medium, such as from the core to the cladding, will be bent in a manner proportional to the individual indices of refraction. The amount of bending is, of course, related to the angle at which the light ray strikes the boundary, known as the angle of incidence. Once the angle of incidence reaches a critical angle all the light rays will be reflected back into the core and none will escape into the cladding. Repeated reflection of the light ray in this manner permits light to propagate through the fiber, by repeatingly bouncing off the barrier between the core and the cladding with practically none of the light escaping through the cladding. It can be seen by this brief explanation that several factors account for the capability of certain fibers to transmit light therethrough. Factors such as the indices of refraction of the core and cladding material, the angle at which the light is launched at one end of the fiber and the relative continuity of the fiber itself all effect the quality of the light being transmitted through the fiber.

Any change in the fiber continuity, such as by mechanical deformation of the fiber itself, would severely change the angle of incidence and the angle of refraction of light propagating through the wave-guide at the point of the mechanical deformation. Changes in the angle of incidence due to fiber deformation would cause some of the light rays to not be totally reflected and thereby escape into the cladding. This phenomenon enables optical wave guides to serve as a sensor, sensing this mechanical deformation placed on the fiber by an external stress.

Fiber optic sensors may be referred to as being of one of two types. The first optical sensor is a phase sensor which detects changes in the phase of light propagating through the fiber. In practice, a phase sensor employs a laser which launches a very precise and specifically defined light wave through the fiber. This light is then divided into two paths, the first path returning directly to a detector and the second path causes the light to pass through the environment which is to be sensed. Deformation of the fiber in the sensed environment caused by external stress on the fiber will result in a phase change which when received by the detector will be compared to the light which is transmitted directly to the detector from the laser. By comparing the phase shift between the sensed environment and the direct path, the effect of the stress on the fiber may be measured.

Phase sensors provide a highly desirable and very sensitive sensor. Small amounts of stress in the sensing environment can readily be detected in a phase sensor. However, these sensors are very expensive in that a constant source of light with no phase shift and single wavelength is needed and is typically provided by a laser. Also, the detector used to differentiate between the phases of the light is very sensitive and accordingly, very expensive. Thus, while a phase sensor more than adequately provides sensing capabilities it is extremely expensive and difficult to construct.

A second group of optical sensors known as amplitude sensors measure the strength or intensity of light, as opposed to the phase of the light. As strength or intensity of light is a readily discernable characteristic, these amplitude sensors are much less expensive and much easier to construct. Simply stated, amplitude sensors compare the strength or intensity of the light launched at one end of the sensor with the strength or intensity of the light which exits the fiber at the other end. Any disturbance or deformation in the fiber, due to an external stress, will cause some of the light to escape through the cladding and thereby reduce the amount of light exiting the fiber. While theoretically this is an inexpensive and easy way to detect stress on a fiber, amplitude sensors are not very sensitive. It may take a significant amount of mechanical deformation for a discernable amount of light to be lost through the cladding. A small amount of stress on the fiber will not cause light of such an amount to exit through the cladding so as to make the loss of light measured at the exiting end of the fiber readily detectable.

If light transmission may be thought of as a percentage of total intensity where 100% of the intensity is launched at one end, deformation on the fiber caused by external stress may only cause 1/10th of 1% of the light to of the light to be lost through the cladding. Thus a comparison of 100% of the light being launched with 99.9% of the light exiting from the fiber may be a differential which is so small as not to be effectively measurable.

One attempt at a solution to problems with amplitude sensors is shown in U.S. Patent Nos. 4,342,907 issued August 3, 1982, and 4,443,700 issued April 17, 1984. In recognizing the difficulty in effectively measuring the relative differences between the intensity of the light launched with intensity of the light exiting the fiber, the '700 and '907 patents look toward measuring the light lost through the cladding as opposed to the light propagated through the core. Theoretically, this overcomes many of the disadvantages of the above described amplitude sensor. As shown and described in Figure 1 herein, no light will be transmitted through the core into the cladding where the angle of incidence is greater than the critical angle. However, once the fiber is disturbed by external stress, some light will exit through the core and into the cladding. The '700 and '907 patents contemplate measuring this escaping light in the cladding as compared with no light escaping in the normal case and measuring this amount of escaping light to detect changes in light propagation caused by deformation of the wave-guide.

Following the above example, while assuming still only 1/10th of 1% of light will escape in a deformed fiber from the core to the cladding, it can be seen that a .1% as a comparison to no light escaping in the normal case is a more readily interpretable measurement. While theoretically this provides a sensor having increased sensitivity, it is in practice very difficult to measure loss of light through the cladding. Extremely sophisticated coupling techniques are needed to tap into the cladding of the fiber to measure the light lost therethrough. Couplers for coupling to the cladding of the fiber do not permit accurate measurement of light lost through the cladding. Therefore, measuring the amount of light lost through the cladding is as impracticable and difficult as comparing the intensity of light launched with the intensity of light exiting the fiber.

A further limitation of the '700 and '907 patents is that these devices still requires significant stress to entice the light waves from the core to the cladding. As shown in Figure 1 herein, the fiber is specifically designed by selection of the appropriate indices of refraction of the core and the cladding to keep the light within the core and not allow light to escape into the cladding. Thus, the principle behind the '700 and '907 patents works against the principle of light propagation through an optical wave-guide.

It is, therefore, desirable to provide an optical sensor whereby light launched at one end of the core of the fiber and which propagates therealong may be discernably measured in the core at the other end thereof.

SUMMARY OF THE INVENTION

It is an object of the present invention to provide a sensing method employing an optical wave-guide whereby a disturbance in the wave-guide caused by external stress thereon may be measured in terms of the light propagating therethrough.

It is a further object of the present invention to provide a sensing method wherein disturbances in light launched in the core of an optical fiber may be discernably measured.

It is a still further object of the present invention to employ a method of sensing changes in the external environment surrounding an optical fiber whereby changes in the light distribution in the fiber caused by changes in the external environment surrounding the fiber may be measured.

In the efficient attainment of these and other objects the present invention looks toward providing a method of sensing changes in the external environment surrounding an elongate fiber whereby light is launched in one end of the optical fiber in a restricted group of modes, substantially less than total number of modes supported in the fiber. Disturbances in the fiber caused by changes in the external environment therearound will change the modal distribution of the launched light. These changes in the modal distribution are measured at the other end of the fiber and may be compared with the original values to sense the changes in the external environment surrounding the optical fiber.

In a specific example, shown by way of preferred embodiment in the present invention, a method of sensing changes in the external environment surrounding an elongate multimode optical fiber is disclosed. The method includes launching light of a given intensity in one end of the optical fiber. The light is launched in a restricted group of modes which is substantially less than the total number of modes supported by the fiber. It has been found that superior results are achieved by launching light only in the lowest order of modes which may be supported by the fiber. The light then propagates through the core of the fiber in the restricted modes until it is disturbed by changes in the external environment surrounding the fiber. These changes will cause changes in the modal distribution within the optical fiber. These changes may be detected at the other end of the fiber. By launching light in only a restricted group of modes which is substantially less than the total number of modes supported by the fiber, changes in the intensity of the light in those modes caused by changes in the external environment surrounding the fiber may be detected in those modes eminating from the other end of the fiber. Since the light launched in one end of the optical fiber is restricted to a group of modes which is substantially less than the total number of modes supported by the fiber, the changes in the modal distribution due to external stress on the fiber will be readily preceivable. The comparative values of the modal distribution and intensity of the light launched and the light eminating from the fiber may be used to effectively determine the degree of external stress acting upon the optical fiber.

## BRIEF DESCRIPTION OF DRAWINGS

Figure 1 is a schematic representation of light propagating through an optical fiber.

Figure 2 is a perspective view of an end portion of a multimode, step index optical fiber used in accordance with the present invention.

Figure 3 is a schematic representation of the modal distribution of light propagating an optical fiber.

Figure 4 is an enlarged schematic representation of the optical fiber shown in Figure 3.

Figure 5 is a schematic representation of light entering and exiting a fiber.

Figure 6 is a graphic representation of modal distribution of light.

Figure 7 is a schematic diagram showing the sensing method of the present invention.

## DETAILED DESCRIPTION OF THE PREFERRED EMBODIMENTS

The present invention contemplates employing an optical fiber in a sensing apparatus to monitor the effects of external stress upon the optical fiber. It is well known that disturbances in an optical fiber caused by external stress will cause corresponding changes in the distribution of light propagating therethrough.

Referring now to Figures 1 and 2, the present invention employs an optical wave-guide in the form of a fiber optic cable 1 having a core 10 and cladding 12 which make up an optically transmissive fiber 11. An outer insulative buffer 14 surrounds the fiber 11. Cable 1 is of the type which is readily commercially available and may include a glass or plastic fiber therein. However, in preferred form a glass fiber is used due to its superior optical qualities.

Fiber 11 is of the type known in the art as a step index fiber wherein the core of the fiber has a uniform optical refractive index $N_1$. Cladding 12 also has a uniform refractive index $N_2$ which is less than the refractive index $N_1$ of core 10. The relative refractive indices of the core and the cladding define boundary conditions which permit light rays injected into one end of the fiber (as shown in Figure 1) to propagate along the length of the fiber and exit the other end thereof.

Referring additionally to Figures 3 and 4, light rays 16 propagate through a step index fiber in various paths called modes. The number of modes which can propagate through a fiber is dictated by the size, i.e., the diameter of the core of the fiber employed. Very small fibers can only support one mode therealong. These fibers are known as single mode fibers. However, the fibers which are larger in diameter, such as those employed in the present invention, can support a great number of modes therein. These fibers are know as multimode fibers. The various modes of the fiber may be defined by the angle at which the light ray is injected or launched into the fiber. Light which is launched at or below the critical angle $\Theta$, as defined above, will be reflected at the boundary of the core and the cladding and will be continuously propagated through the core of the fiber. The modes which satisfy

these conditions are known as bound core modes, as they will continuously remain in the core of the fiber. Light launched at an angle greater than the critical angle will not be reflected, but will escape into the cladding and not be propagated through the core of the fiber. These modes are known as cladding modes. The bound core modes may be further defined by the angle at which they are launched into the core. Low order bound core modes are those modes which are launched along the central axis of the fiber. The lowest order mode is the axial ray 20 which is launched along the fiber axis parallel to the longitudinal extent of the fiber. Modes which approach the critical angle shown as ray 22 in Figure 4 are referred to as high order bound core modes.

Referring to Figure 4, it can be seen that bound core mode 22 is of a higher order than bound core mode 24 as the angle of obliqueness $\Phi$ measured from the axial ray 20 of ray 22 is greater than that of ray 24. Each of rays 20, 22 and 24 as well as other rays defining the various modes of fiber 11 will propagate through the fiber in a manner substantially shown in Figures 3 and 4, as long as the fiber is not disturbed. The modal distribution of light detected at the exiting end of the fiber will be identical to the modal distribution of light injected into the fiber. In a short length of fiber it is expected that each ray or mode will continuously "bounce" off the boundary between core 10 and cladding 12 at repeatedly the same angle so that each exiting mode will have the same intensity as that injected. However, it can be appreciated that a disturbance in the optical fiber, such as by bending the fiber, deforming it or any other mechanical or non-mechanical disturbance will disrupt the angular distribution of the light propagating therethrough. As the boundary condition between the core and the cladding will be changed the angle of refraction will also be changed accordingly. Thus, a ray 24 which may be injected in a low order mode may be "excited", due to the deformation of a the fiber, into a higher order mode. Similarly, a higher order mode ray 22 may be excited into a lower order mode. It is also expected that certain cladding modes may be excited into core modes due to fiber disturbance and likewise, certain bounded core modes may be excited into the cladding. However, where the disturbance is weak it is known that the total intensity of light injected into the fiber will be substantially equivalent to the total light eminating from the fiber and only the modal distribution within the fiber will be disturbed. Thus, light which was injected in low order modes may be excited to higher modes and vice versa. Fiber optic sensors known in the art employ this phenomenon of modal redistribution due to fiber disturbance in order to sense the degree of disturbance on the fiber. However, in situations where light is injected into all or most of the modes which propagate through the fiber or at least in all or most of the bound core modes, the fiber will not serve as a sensitive measure of fiber disturbance. Since light is injected into all of the modes, when a ray such as ray 24, in a given mode is excited to a mode of a higher or lower order, another ray, such as ray 22, is typically excited into the mode vacated by ray 24. Thus, the light exiting the fiber will have a similar modal distribution as that launched. The only detectable variation will be those modes which are lost into the cladding. However, since a fiber is designed to retain and propagate all bound core modes it would take a substantial disturbance in the fiber to cause a preceivable loss of light through the cladding. Therefore, launching light in all or most core modes is not a practicable method of employing the fiber as a sensitive sensor.

In recognizing that light injected into all bounded core modes can not accurately serve as a sensitive

fiber optic sensor, the present invention employs a method wherein light is launched in only selected bound core modes of the optical fiber. In order to effectively serve as an optical sensor it has been found that the light must be launched in only a restricted number of bound core modes which is substantially less than the total number of bound core modes supported by the fiber.

Referring now to Figure 5, light is launched or otherwise induced in one end 10a of the core 10 of an optical fiber 11. However, the light launched is severely restricted to only selected ones of the total number of bound core modes which are supported by the fiber. In the example shown in Figure 5, the selected modes are only those modes which are of the lowest order of bounded modes. These are the modes which have an angle of obliqueness which is very small, i.e., very close to the axial ray 20. It is further contemplated that it is ideal to launch just the axial ray, i.e., those modes which are parallel to the longitudinal axis of the fiber. However, in practice this would be extremely difficult if not impossible. Therefore, the launched modes are restricted to these modes which are extremely close to the axially ray and are known as the lowest order bounded modes. Launching light in this manner restricts the light to the lowest order modes and excludes light from all other bounded core modes. Thus, the lowest order modes would contain light while the remainder of the bounded modes would be dark. Now, any disturbance in the fiber which may be caused by external stress thereon will cause a significant change in the modal distribution which is preceived at the exiting end 10b of fiber core 10. Since a vast majority of the bounded core modes remain dark the disturbed lowest order lighted modes may be excited from those lowest order modes to any of the dark higher order modes. As there are no higher order modes to be excited back into the vacated lowest order modes, as would be the case in that above described with respect to Figure 4, many of the lowest order modes which were originally lighted will now experience a loss of light which may be measured at the exiting end 10b of fiber core 10. Also, the higher order bounded modes which were originally left dark will now contain light which has been excited from the lowest order lighted modes. Thus, a significant change in the preceivable modal distribution at the exiting end 10b of the fiber will be achieved by a only a slight disturbance in the fiber. It is only by restricting the launched light to a small number of the total bounded modes available in the fiber and excluding light from all other bounded modes will such a difference be measurably preceivable.

In experimentation it has been found that the most significant and dramatic results occur when the modes selected are only those having a very small angle of obliqueness. However, it is contemplated that suitable results may also be obtained by restricting the launched light to other bounded core modes which are still substantially less than the total number of modes supported by the fiber. It is the restriction of launched light to a small number of the total available bounded modes which produces a perceivable difference in those modes exiting the fiber due to fiber disturbance caused by external stress.

The modal distribution of the exiting light due to fiber disturbance will be noticed in two instances. First and primarily, a precipitous drop in the light intensity in the originally launched modes will be noted as the light will be excited from the originally launched modes to other modes which were previously kept dark. Secondly, light will be noted in those other modes which were previously kept dark due to movement of the light from the lighted modes to the dark modes. An expected change in the modal distribution of launched light in 10a of fiber core 10 as compared with detected light at end 10b due to fiber disturbance may be seen in Figure 6 as a graph of intensity vs. angular distribution. Graph I represent the modal distribution of light injected into 10a of fiber core 10. The most intense light is injected along the axial ray having an angle of obliqueness of zero. Other light is also injected along other angles on each side of, but very close to zero. It can be seen that no light is injected into modes having higher angles of obliqueness greater than about 1°. If the fiber were to remain undisturbed the modal distribution of light detected at end 10b would be substantially identical to graph I. However, disturbances in the fiber which may be caused by external stress thereon will cause modal redistribution of the light from the lower order modes to higher order modes. Graph D shows a typical detected modal distribution of light which was originally injected as shown in graph I. It is noted that the orginially launched light has been substantially redistributed such that a measurable difference is noted, especially at those modes very close to a zero angle of obliqueness. Light which was injected along the axial ray and noted in graph I as $i_1$ has been substantially redistributed by disturbances in the fiber so that the intensity of the light at that mode is now substantially less $d_1$. The difference between $i_1$ and $d_1$ is sufficient to interpret into a preceivable and measurable indication of the amount of stress on the fiber. It is also noted that one of the modes which was kept dark upon injection of light will contain light upon detection due to redistribution of the lighted modes into the dark modes upon fiber disturbance. Location $i_2$ represents little or no light intensity upon injection at a mode having a higher angle of obliqueness. Yet, when detected at that mode it will have a higher degree of intensity

$d_2$ due to disturbance in the fiber. The intensity differential between $i_2$ and $d_2$ may also be used to determine the amount of external stress which was placed on the fiber.

Referring now to Figure 7, a schematic representation of the apparatus employed with the method of the present invention may be described.

The present invention contemplates using a light source which may be any conventional device used for generating light. Suitable devices which are known in the art include lasers, light emitting diodes and light generating lamps. The light source, however, must be capable of readily injecting light into the fiber 10 in only a restricted number of modes less than all of the bounded core modes as described above. The fiber 10 is then extended through the environmental area 40 which is to be sensed. Within the sensing environment a sensing apparatus 50 may be employed which will impart a disturbance to the fiber or cause a change in the fiber itself upon changes in the sensing environment 40. The sensing apparatus may be one of any number of commerically available sensors which applies a stress to the fiber due to changes in the environment 40 surrounding the sensor. The sensing apparatus 50 may be of the type responsive to pressure, temperature, acoustical waves or any other desired medium which is to be sensed. It is further contemplated that the sensing environment 40 surrounding the fiber may serve as its own sensing apparatus whereby changes in the sensing environment will impart a direct disturbance on the fiber itself.

The detector system 60 is also a commercially available item which may be, for example, a far field intensity detector which will detect the intensity of light eminating from fiber 10. The detector 60 would detect light along at least the modes of the fiber in which light was initially launched. Also, the detector may detect light in all bounded core modes to determine the full modal distribution of light eminating from fiber 10.

Illustrated schematicly in Figure 5, detector 60 may be employed along a detection plane 65 to detect intensity of light at the various modes eminating from end face 10b of fiber core 10. Detection in all bounded core modes would yield a detection graph similar to that shown in Figure 6.

Referring again to Figure 7, electronic apparatus 70 may be employed to correlate the detected data as compared with the launched data to generate information useful in determining the amount of disturbance caused to the fiber. Electronics of this type are widely known and used in the sensing art.

Various changes to the foregoing described and shown structures would now be evident to those skilled in the art. Accordingly, the particularly disclosed scope of the invention is set forth in the following claims.

CLAIMS:

1. A method of sensing changes in the external environment surrounding an elongate multimode optical fiber comprising the steps of:

launching light of a given intensity in one end of said optical fiber, said light being launched in only a restricted group of modes, substantially less than the total number of modes supported by the fiber;

measuring the intensity of said launched light exiting at the other end of said optical fiber in at least one of said restricted modes; and

comparing the value of said given intensity with said measured intensity whereby said changes in said external environment surrounding said fiber may be determined by said comparison.

2. A method in accordance with claim 1 wherein said restricted group of modes includes only low order modes.

3. A method in accordance with claim 1 or claim 2 wherein said measuring step comprises:

placing a detector adjacent said other end of said fiber to measure said exiting light in said restricted group of modes.

4. A method in accordance with claim 2 wherein said low order modes are modes which are substantially parallel to the central axis of said elongate fiber.

5. A method in accordance with claim 4 wherein said low order modes are modes which are substantially within 1° of parallel.

6. A method of sensing external stress on an elongate optical fiber comprising a fiber core which supports plural light modes and having cladding therearound, including the steps of:

launching light in the core of said fiber;

substantially restricting said light to selected core modes which are substantially less than the total number of modes supported by said core;

disturbing a portion of said optical fiber by application of external stress thereto, to excite said light to non-selected modes; and

optically detecting said light exiting said fiber in at least said selected modes.

7. An optical sensing apparatus for sensing changes in a sensing environment comprising:

an elongate optical fiber having a core supporting plural light modes at least a portion of said fiber extends through said sensing environment, said fiber being subject to disturbance due to changes in said sensing environment;

a light source for injecting light in a substantially restricted number of said plural light modes;

sensing means response to changes in said sensing environment to impart said disturbance to said fiber; and

detection means for detecting light in said restricted number of modes.

8. An optical sensing apparatus in accordance with claim 7 wherein said light source injects light in only lowest order modes.

9. An optical sensing apparatus in accordance with claim 7 wherein said detection means detects light in said plural light modes.

10. An optical sensing apparatus in accordance with claim 7 wherein said detection means detects light in said restricted number of plural light modes.

FIG-1

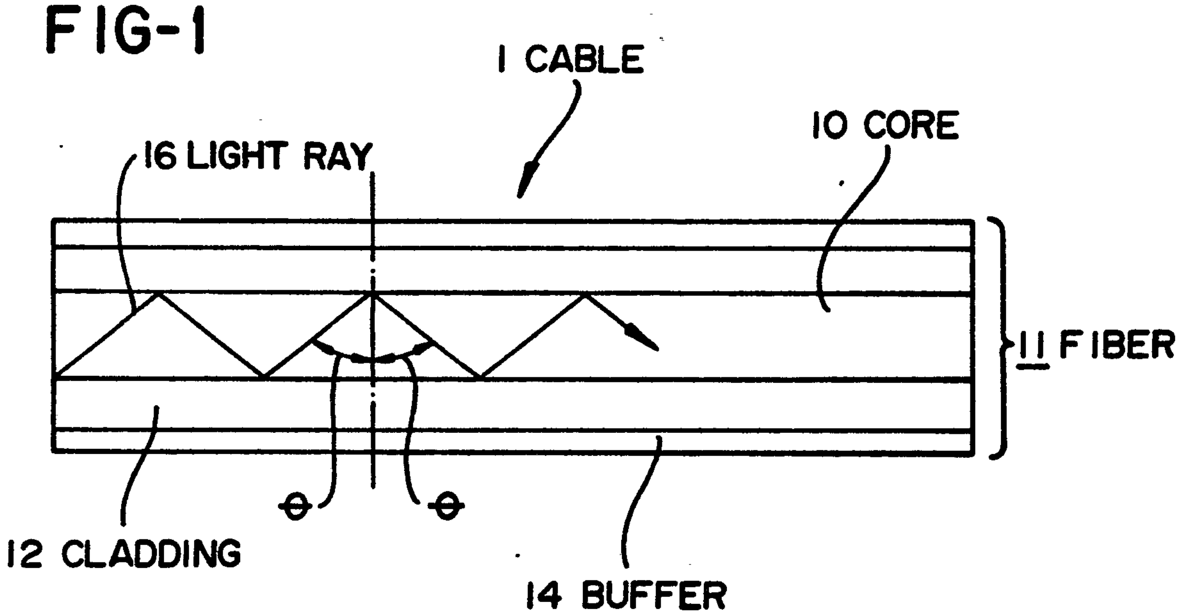
1 CABLE
10 CORE
16 LIGHT RAY
11 FIBER
θ
θ
12 CLADDING
14 BUFFER

FIG-2

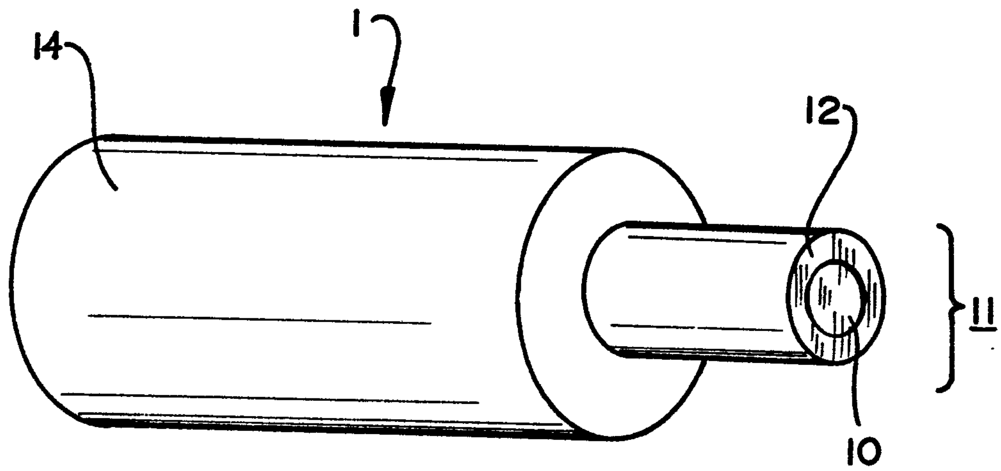
14
1
12
11
10

FIG-3

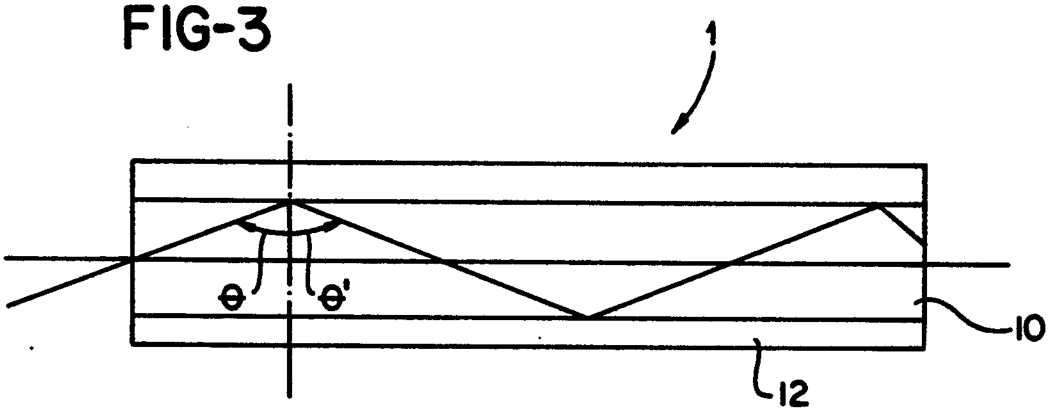


FIG-4

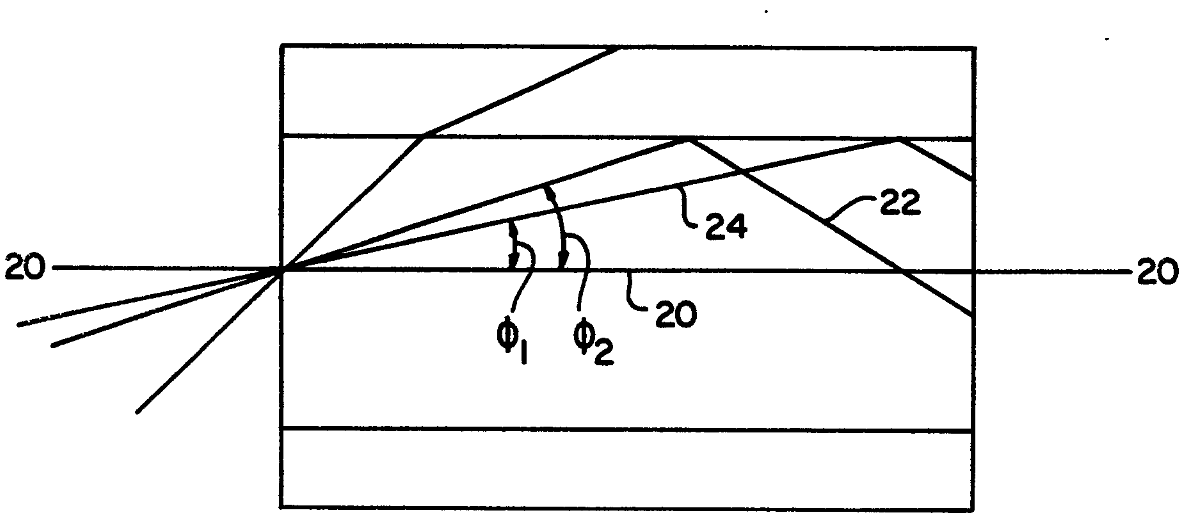

FIG-5

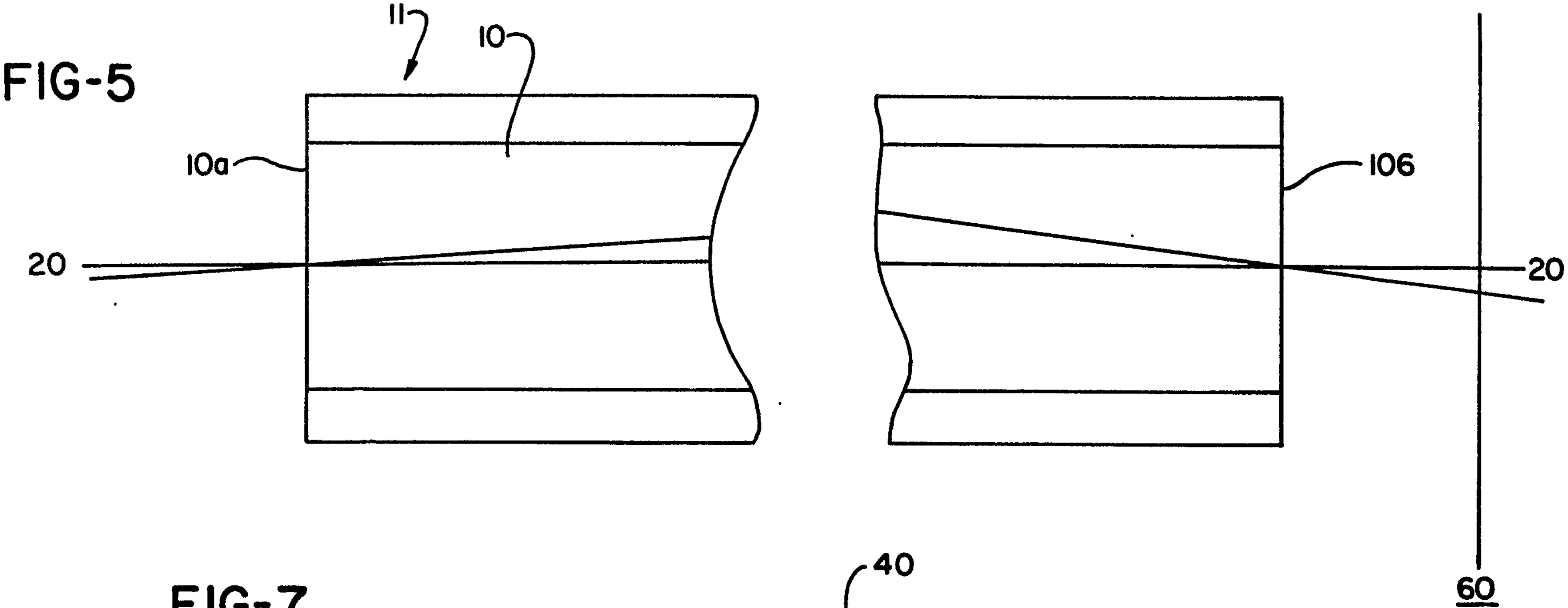


FIG-7

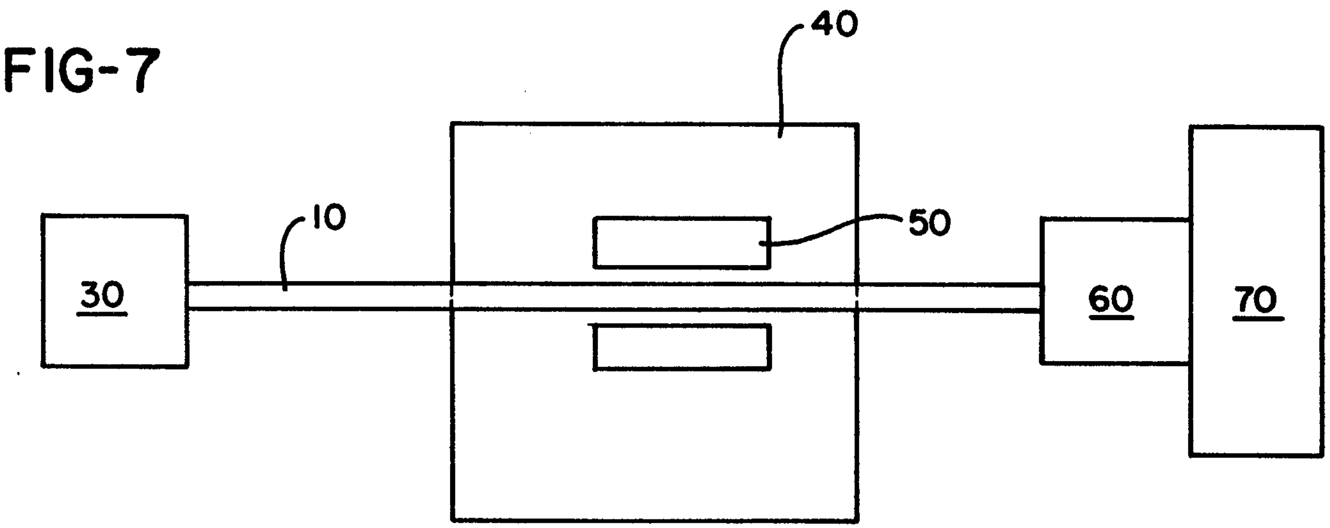

FIG-6

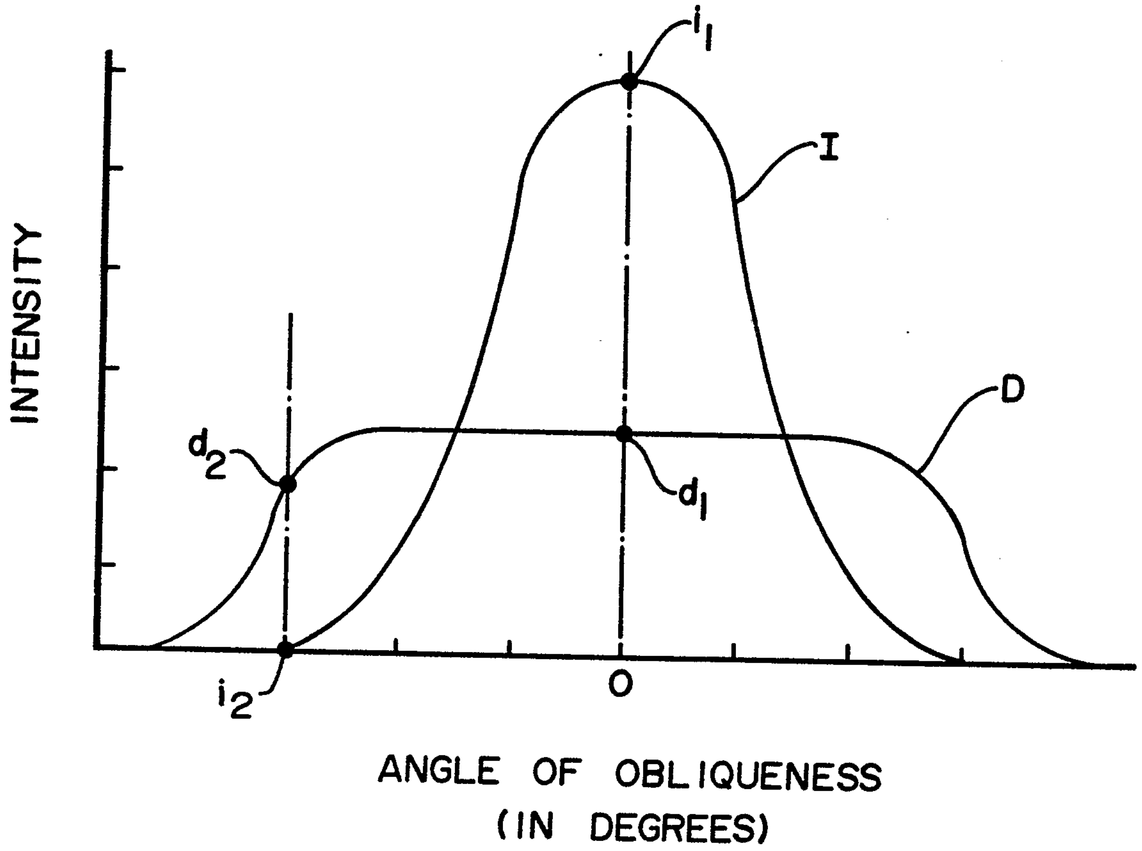

0245091

European Patent Office

# EUROPEAN SEARCH REPORT

Application number

EP 87 30 4042

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 342 907 (P.B. MACEDO et al.) --- | 1 | G 01 L 1/24<br>G 01 L 11/00 |
| A,D | US-A-4 443 700 (P.B. MACEDO et al.) --- | 1 | |
| A | WO-A-7 900 377 (P.B. MACEDO et al.) --- | 1 | |
| A | DE-A-3 236 435 (FRAUNHOFER-GESELLSCHAFT) --- | 1 | |
| A | LASER U. OPTOELEKTRONIK, vol. 15, no. 3, September 1983, pages 226-234, Stuttgart; K. SPENNER et al.: "Optical multimode fiber sensors: A review" --- | | TECHNICAL FIELDS SEARCHED (Int. Cl.4) |
| A | DE-A-3 047 308 (HONEYWELL INC.) ----- | | G 01 L 1/24<br>G 01 L 11/00 |

The present search report has been drawn up for all claims

| Place of search | Date of completion of the search | Examiner |
|---|---|---|
| BERLIN | 04-08-1987 | KOEHN G |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82